# EUROPÄISCHE PATENTANMELDUNG

(11) **EP 1 852 621 A1**
(43) Veröffentlichungstag der Anmeldung: **07.11.2007**
(21) Anmeldenummer: 07007988.4
(22) Anmeldetag: 19.04.2007
(51) Int. Cl.: F16D 13/75, F16D 13/64

(54) **Kupplungsscheibeneinrichtung**

(30) Priorität: 06.05.2006 DE 102006021218
(71) Anmelder: LuK Lamellen und Kupplungsbau Beteiligungs KG, 77815 Bühl (DE)
(72) Erfinder: Man, Laszlo, 77833 Ottersweier-Unzhurst (DE)

(57) **Zusammenfassung**

Die Erfindung betrifft eine Kupplungsscheibeneinrichtung mit in axialer Richtung voneinander beabstandeten Reibbelaghälften, die zwischen zwei Kupplungselementen einklemmbar sind, und mit einer Nachstelleinrichtung, die zwischen den Reibbeiaghälften wirksam ist, um einen betriebsbedingten Verschleiß der Reibbelaghälften auszugleichen, der von einer Sensoreinrichtung erfasst wird.

Die Erfindung zeichnet sich dadurch aus, dass die Sensoreinrichtung ein Sensorreibelement mit einer Sensorreibfläche umfasst, an der eines der Kupplungselemente zur Anlage kommt, wenn dieses Kupplungselement an einer Reibfläche der zugehörigen Reibbeiaghälfte zur Anlage kommt, und die durch eine Abstandshalteeinrichtung in axialer Richtung in einem definierten Abstand zu einer Reibfläche der anderen Reibbelaghälfte gehalten ist.

## Beschreibung

Die Erfindung betrifft eine Kupplungsscheibeneinrichtung mit in axialer Richtung voneinander beabstandeten Reibbelaghälften, die zwischen zwei Kupplungselementen einklemmbar sind, und mit einer Nachstelleinrichtung, die zwischen den Reibbelaghälften wirksam ist, um einen betriebsbedingten Verschleiß der Reibbelaghälften auszugleichen, der von einer Sensoreinrichtung erfasst wird.

Aus der deutschen Offenlegungsschrift DE 100 11 418 A1 ist ein Kupplungsaggregat mit einer Kupplungsscheibeneinrichtung und einer Nachstelleinrichtung sowie einer Sensoreinrichtung bekannt.

Aufgabe der Erfindung ist es, eine Kupplungsscheibeneinrichtung gemäß dem Oberbegriff des Anspruchs 1 zu schaffen, die einfach aufgebaut und kostengünstig herstellbar ist.

Die Aufgabe ist bei einer Kupplungsscheibeneinrichtung mit in axialer Richtung voneinander beabstandeten Reibbelaghälften, die zwischen zwei Kupplungselementen einklemmbar sind, und mit einer Nachstelleinrichtung, die zwischen den Reibbelaghälften wirksam ist, um einen betriebsbedingten Verschleiß der Reibbelaghälften auszugleichen, der von einer Sensoreinrichtung erfasst wird, dadurch gelöst, dass die Sensoreinrichtung ein Sensorreibelement mit einer Sensorreibfläche umfasst, an der eines der Kupplungselemente zur Anlage kommt, wenn dieses Kupplungselement an einer Reibfläche der zugehörigen Reibbelaghälfte zur Anlage kommt, und die durch eine Abstandshalteeinrichtung in axialer Richtung in einem definierten Abstand zu einer Reibfläche der anderen Reibbelaghälfte gehalten ist. Die Abstandshalteeinrichtung wirkt so mit dem Sensorreibelement und den Reibbelaghälften zusammen, dass das Sensorreibelement und die Reibbelaghälften eine Gesamtdicke vorgeben, die dem Neuzustand der Kupplungsscheibeneinrichtung entspricht. An der Sensorreibfläche tritt durch das daran in Anlage kommende Kupplungselement im Betrieb der Kupplungsscheibeneinrichtung ebenso Verschleiß auf wie an den Reibflächen der Reibbelaghälften. Die erfindungsgemäße Lösung hat den Vorteil, dass nur ein Sensorreibelement benötigt wird, um den Verschleiß der Reibbelaghälften über die gesamte Lebensdauer einer mit der Kupplungsscheibeneinrichtung ausgestatteten Kupplungseinrichtung zu erfassen.

Ein bevorzugtes Ausführungsbeispiel der Kupplungsscheibeneinrichtung ist dadurch gekennzeichnet, dass die Sensorreibfläche in der gleichen Ebene wie die Reibfläche der zugehörigen Reibbelaghälfte angeordnet ist. Die Sensorreibfläche und die Reibfläche der zugehörigen Reibbelaghälfte sind in einer gemeinsamen Berührungsebene für das zugehörige Kupplungselement angeordnet. Bei den Kupplungselementen handelt es sich vorzugsweise um ein Schwungrad und eine Anpressplatte einer Kupplungseinrichtung. Die Kupplungselemente werden auch als Druckplatte und Gegendruckplatte bezeichnet.

Ein weiteres bevorzugtes Ausführungsbeispiel der Kupplungsscheibeneinrichtung ist dadurch gekennzeichnet, dass das Sensorreibelement und die zugehörige Reibbelaghälfte in axialer Richtung an einem gemeinsamen Abstützelement abgestützt sind. Bei dem Abstützelement, das auf der der Sensorreibfläche abgewandten Seite angreift, handelt es sich vorzugsweise um eine Rampeneinrichtung.

Ein weiteres bevorzugtes Ausführungsbeispiel der Kupplungsscheibeneinrichtung ist dadurch gekennzeichnet, dass das Sensorreibelement und die zugehörige Reibbelaghälfte in axialer Richtung an einem Gegenrampenring einer Rampeneinrichtung abgestützt sind. Die Reibbelaghälfte ist vorzugsweise an einem Trägerblech befestigt, an dem das Sensorreibelement anliegt. Das Trägerblech wiederum ist vorzugsweise an dem Gegenrampenring befestigt.

Ein weiteres bevorzugtes Ausführungsbeispiel der Kupplungsscheibeneinrichtung ist dadurch gekennzeichnet, dass die andere Reibbelaghälfte an einem Verstellrampenring abgestützt ist, der mindestens eine Nachstellrampe aufweist und gegenüber dem Gegenrampenring verdrehbar ist. Der Gegenrampenring weist mindestens eine Gegennachstellrampe auf, die mit der Nachstellrampe zusammenwirkt, um die Reibbelaghälften auseinanderzudrücken. Die beiden Rampenringe können durch eine Federeinrichtung in Umfangsrichtung gegeneinander vorgespannt sein. Der Verstellrampenring weist vorzugsweise eine Vielzahl von Nachstellrampen auf, die jeweils mit einer Gegennachstellrampe des Gegenrampenrings zusammenwirken.

Ein weiteres bevorzugtes Ausführungsbeispiel der Kupplungsscheibeneinrichtung ist dadurch gekennzeichnet, dass der Verstellrampenring eine zusätzliche Steuerrampe aufweist, die mit einer an der Abstandshalteeinrichtung vorgesehenen Gegensteuerrampe zusammenwirkt. Dadurch wird auf einfache Art und Weise erreicht, dass der an dem Sensorreibelement auftretende Verschleiß direkt auf die Rampeneinrichtung übertragen wird.

Ein weiteres bevorzugtes Ausführungsbeispiel der Kupplungsscheibeneinrichtung ist dadurch gekennzeichnet, dass der Steigungswinkel der Steuerrampe nur halb so groß wie der Steigungswinkel der Nachstellrampe ist. Durch das Sensorreibelement wird der Verschleiß an der zugehörigen Reibbelaghälfte detektiert. Vorzugsweise wird davon ausgegangen, dass die Reibbelaghälften im Betrieb gleichmäßig verschleißen. Deshalb wird durch die Nachstellrampe der doppelte Verschleißbetrag nachgestellt, der an dem Sensorreibelement auftritt.

Ein weiteres bevorzugtes Ausführungsbeispiel der Kupplungsscheibeneinrichtung ist dadurch gekennzeichnet, dass das Sensorreibelement rund oder teilweise gerundet ausgebildet und in einer Ausnehmung gehalten ist, die in der zugehörigen Reibbelaghälfte vorgesehen ist. Die Ausnehmung ist vorzugsweise etwas größer als das Sensorreibelement und hat vorzugsweise die Gestalt eines Langlochs. Dadurch wird gewährleistet, dass sich das Sensorreibelement in der Ausnehmung bewegen und/oder verdrehen kann.

Ein weiteres bevorzugtes Ausführungsbeispiel der Kupplungsscheibeneinrichtung ist dadurch gekennzeichnet, dass das Sensorreibelement in der zugehörigen Ausnehmung drehbar so angeordnet und geführt ist, dass es sich in der zugehörigen Ausnehmung verdreht, wenn das zugehörige Kupplungselement im Betrieb einer mit der Kupplungsscheibeneinrichtung ausgestatteten Kupplungseinrichtung an der Sensorreibfläche des Sensorreibelements zur Anlage kommt. Vorzugsweise verdreht sich das Sensorreibelement im Zug- und Schubbetrieb einer mit der Kupplungsscheibeneinrichtung ausgestatteten Kupplungseinrichtung in entgegen gesetzten Richtungen.

Ein weiteres bevorzugtes Ausführungsbeispiel der Kupplungsscheibeneinrichtung ist dadurch gekennzeichnet, dass die Sensorreibfläche des Sensorreibelements zumindest teilweise innerhalb der Reibfläche der zugehörigen Reibbelaghälfte angeordnet ist. Die Reibfläche umfasst vorzugsweise eine Vielzahl von Reibbelagelementen, die an einem gemeinsamen Trägerblech befestigt sind.

Ein weiteres bevorzugtes Ausführungsbeispiel der Kupplungsscheibeneinrichtung ist dadurch gekennzeichnet, dass sich die Sensorreibfläche des Sensorreibelements aus der Reibfläche der zugehörigen Reibbelaghälfte heraus erstreckt. Das Sensorreibelement kann sich radial nach innen und/oder radial nach außen aus der zugehörigen Reibfläche heraus erstrecken.

Ein weiteres bevorzugtes Ausführungsbeispiel der Kupplungsscheibeneinrichtung ist dadurch gekennzeichnet, dass sich die Sensorreibfläche des Sensorreibelements aus der Reibfläche der zugehörigen Reibbelaghälfte heraus radial nach innen erstreckt. Dadurch kann Bauraum eingespart werden. Außerdem kann die Wirkung der im Betrieb auf das Sensorreibelement wirkenden Fliehkraft ausgenutzt werden, um das Sensorreibelement in der Ausnehmung zu positionieren.

Ein weiteres bevorzugtes Ausführungsbeispiel der Kupplungsscheibeneinrichtung ist dadurch gekennzeichnet, dass der außerhalb der Reibfläche der zugehörigen Reibbelaghälfte angeordnete Bereich der Sensorreibfläche des Sensorreibelements von der Abstandshalteeinrichtung umgriffen wird. Dadurch wird verhindert, dass das zugehörige Kupplungselement an der Abstandshalteeinrichtung zur Anlage kommt, wodurch die Abstandshalteeinrichtung beschädigt werden könnte.

Ein weiteres bevorzugtes Ausführungsbeispiel der Kupplungsscheibeneinrichtung ist dadurch gekennzeichnet, dass die Abstandshalteeinrichtung von einer Blechklammer gebildet wird. Bei der Blechklammer handelt es sich vorzugsweise um ein Stanz-Biegeteil.

Ein weiteres bevorzugtes Ausführungsbeispiel der Kupplungsscheibeneinrichtung ist dadurch gekennzeichnet, dass sich die Blechklammer durch eine Belagtrageeinrichtung der zu dem Sensorreibelement gehörigen Reibbelaghälfte hindurch erstreckt. Dadurch wird die Blechklammer in radialer Richtung und in Umfangsrichtung positioniert.

Ein weiteres bevorzugtes Ausführungsbeispiel der Kupplungsscheibeneinrichtung ist dadurch gekennzeichnet, dass die Reibbelaghälften an zwei Federeinrichtungen angebracht sind. Bei den Federeinrichtungen handelt es sich vorzugsweise um Tellerfedern, insbesondere Tellerfederpakete, die bei gleichzeitiger Drehmomentübertragung eine axiale Bewegung der Reibbelaghälften relativ zueinander ermöglichen. Darüber hinaus halten die Federeinrichtungen die Kupplungsscheibeneinrichtung, insbesondere die Reibbelaghälften, insbesondere in axialer Richtung zusammen.

Ein weiteres bevorzugtes Ausführungsbeispiel der Kupplungsscheibeneinrichtung ist dadurch gekennzeichnet, dass die Federeinrichtungen an einem Zwischenring befestigt sind. Durch den Zwischenring werden die beiden Federeinrichtungen in einem definierten axialen Abstand zueinander angeordnet.

Ein weiteres bevorzugtes Ausführungsbeispiel der Kupplungsscheibeneinrichtung ist dadurch gekennzeichnet, dass ein beziehungsweise der Verstellrampenring einer beziehungsweise der Rampeneinrichtung so angeordnet und gestaltet ist, dass er sich aufgrund seiner Massenträgheit im Betrieb gegenüber einem beziehungsweise dem Gegenrampenring verdreht, um den betriebsbedingten Verschleiß der Reibbelaghälften auszugleichen. Das liefert den Vorteil, dass eine in Umfangsrichtung zwischen den Rampenringen vorgespannte Federeinrichtung entfallen kann. Die Nachstellung wird durch die im Betrieb der Kupplungsscheibeneinrichtung auftretenden Drehschwingungen bewirkt.

Ein weiteres bevorzugtes Ausführungsbeispiel der Kupplungsscheibeneinrichtung ist dadurch gekennzeichnet, dass die Nachstelleinrichtung eine Freilaufeinrichtung umfasst, die ein Verdrehen des Verstellrampenrings relativ zu dem Gegenrampenring nur in Verstellrichtung ermöglicht. Dadurch wird eine automatische Verschleißnachstellung im Betrieb der Kupplungsscheibeneinrichtung ermöglicht.

Die Erfindung betrifft auch ein Kupplungsaggregat zur Drehmomentübertragung zwischen einem Motor und einem Getriebe, mit mindestens einer Kupplungseinrichtung, insbesondere einer Reibungskupplung, die eine Druckplatte umfasst, die drehfest, jedoch axial in Richtung einer zwischen der Druckplatte und einer Gegendruckplatte einklemmbaren Kupplungsscheibeneinrichtung begrenzt verlagerbar ist, wie sie vorab beschrieben ist.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine erfindungsgemäße Kupplungsscheibeneinrichtung im Längsschnitt;
- Figur 2: eine vergrößerte Darstellung eines Halbschnitts der Kupplungsscheibeneinrichtung aus Figur 1;
- Figur 3: die Kupplungsscheibeneinrichtung aus Figur 1 in einer Seitenansicht von rechts;
- Figur 4: die Kupplungsscheibeneinrichtung aus Figur 1 in einer Seitenansicht von links;
- Figur 5: eine perspektivische Schnittansicht der Kupplungsscheibeneinrichtung aus Figur 1;
- Figur 6: einen vergrößerten Ausschnitt aus Figur 5;
- Figur 7: einen Ausschnitt einer Kupplungsbelaghälfte mit einem Sensorreibelement in der Draufsicht;
- Figur 8: eine perspektivische Darstellung eines Verstellrampenrings;
- Figur 9: eine perspektivische Darstellung einer Abstandshalteeinrichtung;
- Figur 10: eine perspektivische Darstellung eines vergrößerten Ausschnitts aus Figur 7;
- Figur 11: eine perspektivische Darstellung des Ausschnitts aus Figur 10 von der entgegen gesetzten Seite;
- Figur 12: eine Freilaufeinrichtung in der Draufsicht;
- Figur 13: die Freilaufeinrichtung aus Figur 12 im eingebauten Zustand in einem Verstellrampenring, wie er in Figur 8 dargestellt ist;
- Figur 14: einen Gegenrampenring in der Draufsicht;
- Figur 15: eine perspektivische Darstellung eines Trägerblechs;
- Figur 16: eine perspektivische Darstellung eines Federblechs;
- Figur 17: eine perspektivische Darstellung eines Zwischenrings:
- Figur 18: eine perspektivische Darstellung von zwei Tellerfedereinrichtungen und
- Figur 19: eine perspektivische Darstellung einer Mitnehmerscheibe.

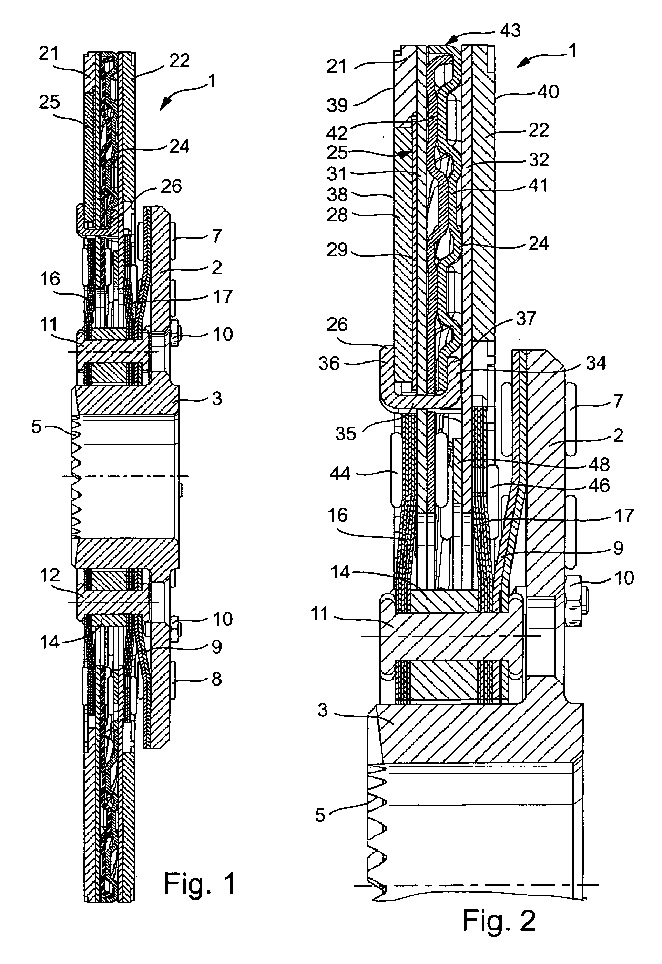

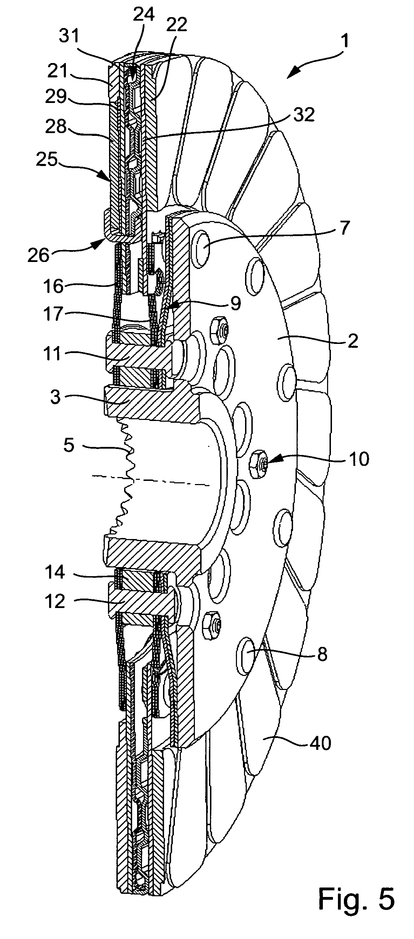

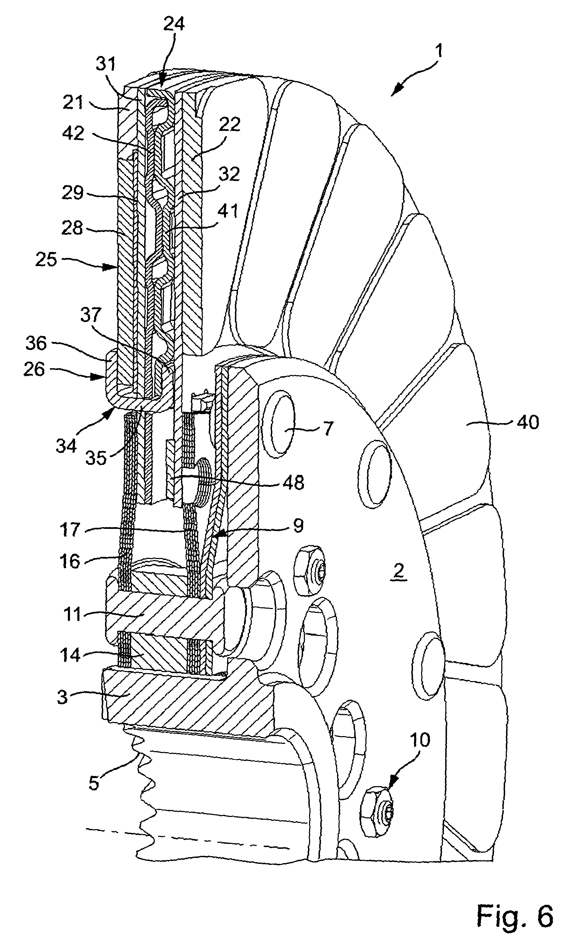

In den Figuren 1 bis 6 ist eine Kupplungsscheibeneinrichtung 1, die kurz als Kupplungsscheibe bezeichnet wird, in verschiedenen Ansichten dargestellt. Die Kupplungsscheibe 1 ist, im (nicht dargestellten) eingebauten Zustand zwischen einer Druckplatte und einer Gegendruckplatte oder einer Anpressplatte und einem Schwungrad einer Reibungskupplung einklemmbar. Die Reibungskupplung ist im Antriebsstrang eines Kraftfahrzeugs angeordnet. Der Antriebsstrang umfasst eine Antriebseinheit, insbesondere eine Brennkraftmaschine, von der eine Kurbelwelle ausgeht, die über die Reibungskupplung mit einer Getriebeeingangswelle koppelbar ist. Der Aufbau und die Funktion einer Reibungskupplung im Antriebsstrang eines Kraftfahrzeugs werden als bekannt vorausgesetzt und hier nicht weiter erläutert.

Die in den Figuren 1 bis 5 in verschiedenen Ansichten dargestellte Kupplungsscheibe 1 umfasst eine Mitnehmerscheibe 2, die einstückig mit einer Nabe 3 verbunden ist. Die Nabe 3 ist an einer ihrer Stirnseiten mit einer Hirth-Verzahnung 5 ausgestattet. Die Hirth-Verzahnung 5 dient dazu, die Nabe 3 der Kupplungsscheibe 1 direkt mit der Kurbelwelle zu verbunden. Die zugehörige Kupplung ist vorzugsweise direkt auf dem Rotor einer elektrischen Maschine befestigt.

Radial außen ist an der Mitnehmerscheibe 2 mit Hilfe von Nietverbindungselementen 7, 8 eine Tellerfedereinrichtung 9 mit ihrem radial äußeren Randbereich befestigt. Die Tellerfedereinrichtung 9 weist einen radial inneren Randbereich auf, dessen Abstand zu der Mitnehmerscheibe 2 mit Hilfe von Kontermuttern 10 einstellbar ist. An dem radial inneren Randbereich der Tellerfedereinrichtung 9 ist mit Hilfe von Nietverbindungselementen 11, 12 ein Zwischenring 14 befestigt. Durch den Zwischenring 14 werden zwei Tellerfedereinrichtungen 16, 17 mit ihrem radial inneren Randbereich in einem definierten axialen Abstand zueinander gehalten. Die Tellerfedereinrichtungen 16, 17 sind mit ihren radial inneren Randbereichen mit Hilfe der Nietverbindungselemente 11, 12 an dem Zwischenring befestigt.

Die Kupplungsscheibe 1 umfasst zwei Belaghälften 21, 22, zwischen denen eine Rampeneinrichtung 24 wirksam ist. Die Kupplungsscheibe 1 umfasst des Weiteren ein Sensorreibelement 25, das mit Hilfe einer Abstandshalteeinrichtung 26 in einem definierten Abstand zu der Belaghälfte 22 gehalten wird. Das Sensorreibelement 25 umfasst ein Sensorbelagpad 28, das auf eine Trägerscheibe 29 aufgeklebt ist. Die Trägerscheibe 29 liegt an einem Trägerblech 31 an, auf das die Belaghälfte 21 aufgeklebt ist. Das Trägerblech 31 ist in axialer Richtung von einem weiteren Trägerblech 32 beabstandet, auf das die Belaghälfte 22 aufgeklebt ist. Auf der den Trägerblechen 31, 32 abgewandten Seiten weisen die Belaghälften 21, 22 jeweils eine Reibfläche 39, 40 auf.

Die Abstandshalteeinrichtung 26 wird von einer Blechklammer 34 gebildet, die einen U-förmigen Querschnitt mit einer Basis 35 aufweist, von der zwei Schenkel 36, 37 ausgehen. Der Schenkel 36 liegt an einer Sensorreibfläche 38 des Sensorreibelements 25 an. Der Schenkel 37 liegt an einem Verstellrampenring 41 an, der mit einem Gegenrampenring 42 einer Rampeneinrichtung 43 zusammenwirkt. Die Basis 35 der Blechklammer 34 erstreckt sich durch den Gegenrampenring 42 hindurch.

Der Gegenrampenring 42 ist mit seinem radial inneren Randbereich zusammen mit dem radial inneren Randbereich des Trägerblechs 31 mit Hilfe von Nietverbindungselementen 44 an dem radial äußeren Randbereich der Tellerfedereinrichtung 16 befestigt. Das Trägerblech 32 ist mit seinem radial inneren Randbereich mit Hilfe von Nietverbindungselementen 46 an dem radial äußeren Randbereich der Tellerfedereinrichtung 17 befestigt. Mit Hilfe der Nietverbindungselemente 46 ist des Weiteren eine Freilaufeinrichtung 48 an dem radial äußeren Randbereich der Tellerfedereinrichtung 17 befestigt.

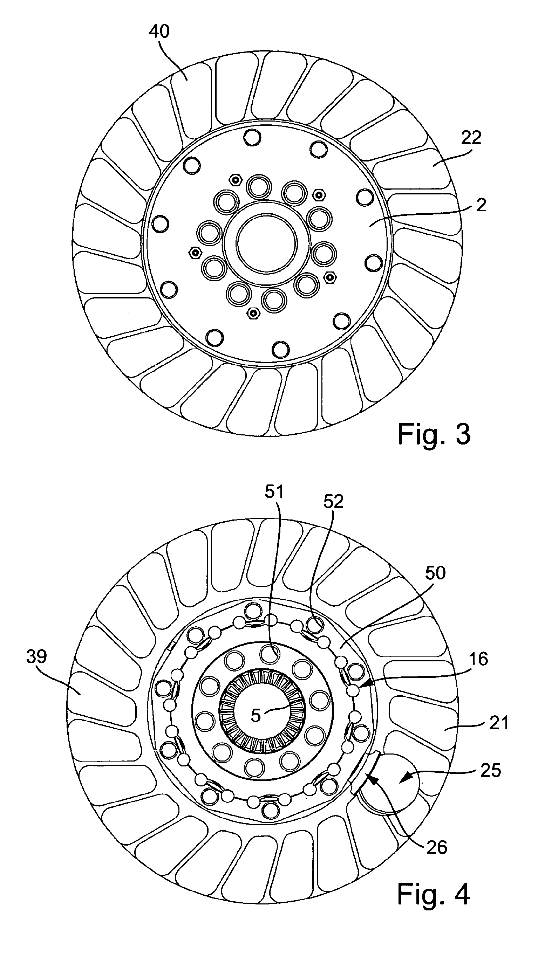

In Figur 4 sieht man, dass die Tellerfedereinrichtung 16 eines von mehreren Federblechen 50 umfasst. Das Federblech 50 ist mit mehreren Durchgangslöchern 51 für die Nietverbindungselemente 11 (siehe Figur 2) ausgestattet. Des Weiteren weist das Federblech 50 mehrere Durchgangslöcher 52 für die Nietverbindungselemente 44 (siehe Figur 2) auf.

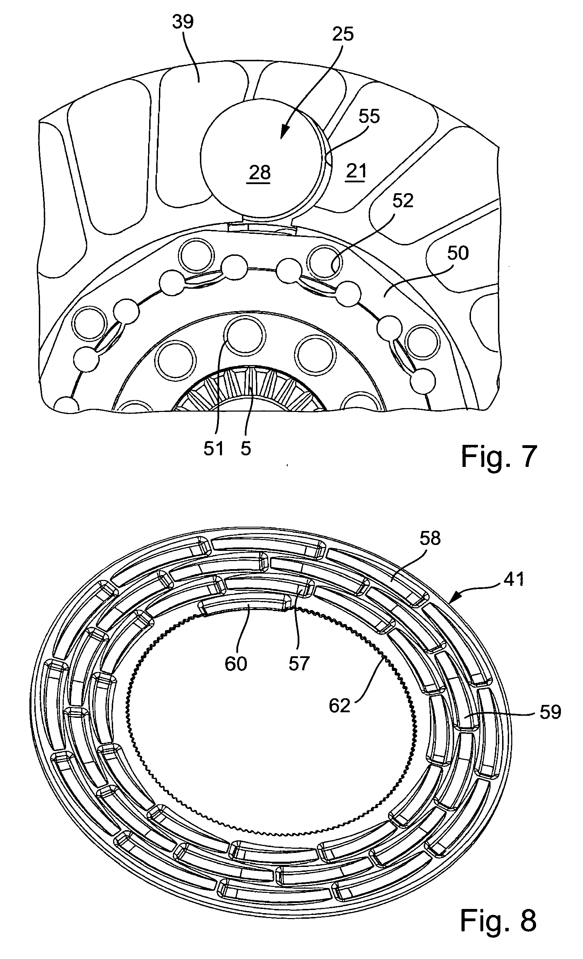

In Figur 7 sieht man, dass das Sensorreibelement 25 in einer Ausnehmung 55 angeordnet ist, die in der Belaghälfte 21 ausgespart ist. Die Ausnehmung 55 hat die Gestalt eines Kreisteils, von dem ein Kreissegment abgeschnitten ist. Der Sensorbelagpad 28 hat die Gestalt einer Kreisscheibe, die radial innen aus der Reibfläche 39 der Belaghälfte 21 herausragt.

In Figur 8 sieht man, dass der Verstellrampenring 41 eine Vielzahl von Nachstellrampen 57 bis 59 aufweist. Zusätzlich zu den Nachstellrampen 57 bis 59 weist der Verstellrampenring 41 eine Steuerrampe 60 auf, die sich in die entgegen gesetzte Richtung zu den Nachstellrampen 57 bis 59 erstreckt. Radial innen wird der Verstellrampenring 41 von einer Innenverzahnung 62 begrenzt.

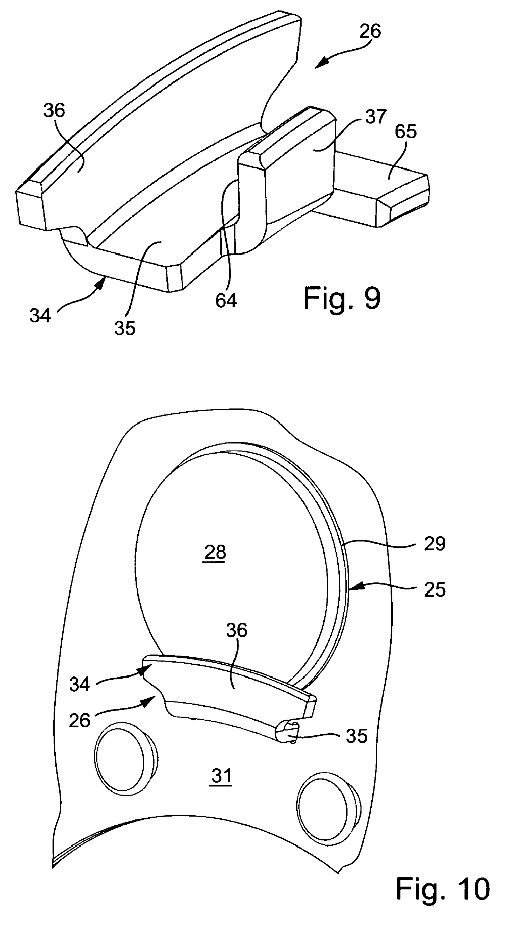

In Figur 9 sieht man, dass an dem Schenkel 37 der Blechklammer 34 eine Gegensteuerrampe 64 ausgebildet ist, die im eingebauten Zustand der Abstandshalteeinrichtung 26 an der Steuerrampe (60 in Figur 8) des Verstellrampenrings 41 anliegt. Darüber hinaus sieht man in Figur 9, dass von der Basis 35 der Blechklammer 34 eine Positioniernase 65 ausgeht.

In Figur 10 ist die Abstandshalteeinrichtung 26 von einer Seite im eingebauten Zustand dargestellt. Der Schenkel 36 der Blechklammer 34 umgreift den radial nach innen aus der Reibfläche 39 der Belaghälfte 21 herausragenden Bereich des Sensorbelagpads 28. Die Basis 35 der Blechklammer 34 erstreckt sich durch das Trägerblech 31 hindurch.

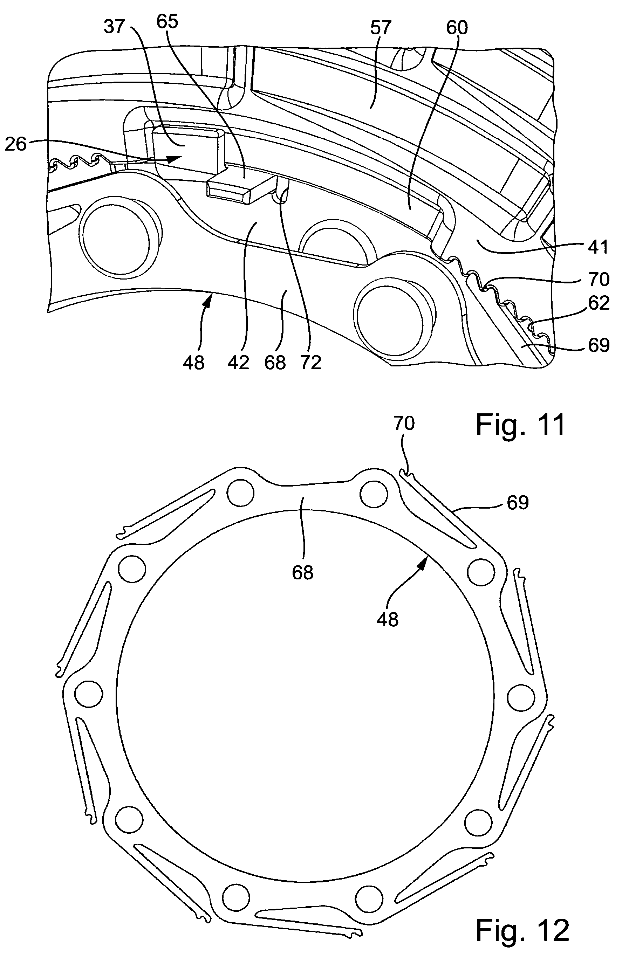

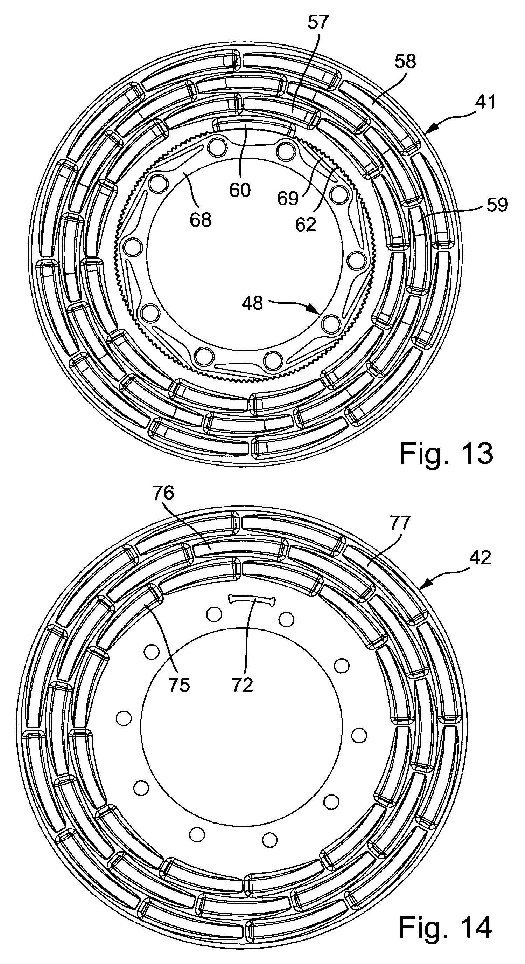

In Figur 11 sieht man, dass sich die Positioniernase 65 durch einen Durchbruch 72 in dem Gegenrampenring 42 hindurch erstreckt. In den Figuren 11 und 12 sieht man, dass die Freilaufeinrichtung 48 einen ringförmigen Grundkörper 68 aufweist, von dem Rastarme 69 ausgehen. An den freien Enden der Rastarme 69 ist jeweils ein Verzahnungsabschnitt 70 ausgebildet. Der Verzahnungsabschnitt 70 greift in die Innenverzahnung 62 des Verstellrampenrings 41 ein. Im Unterschied zu der Darstellung der Figuren 11 und 12 sind die Rastarme 69 in einem bevorzugten Ausführungsbeispiel nicht gleichmäßig über dem Umfang des Grundkörpers 68 verteilt. Dadurch ergibt sich ein sehr kleiner Schließwinkel. In Figur 13 ist die Freilaufeinrichtung 48 im eingebauten Zustand dargestellt.

In Figur 14 sieht man, dass der Gegenrampenring 42 eine Vielzahl von Gegennachstellrampen 75 bis 77 aufweist. Radial innerhalb der Gegennachstellrampen 75 bis 77 weist der Gegenrampenring 42 einen Durchbruch 79 zum Durchführen der Basis 35 der Blechklammer 34 auf.

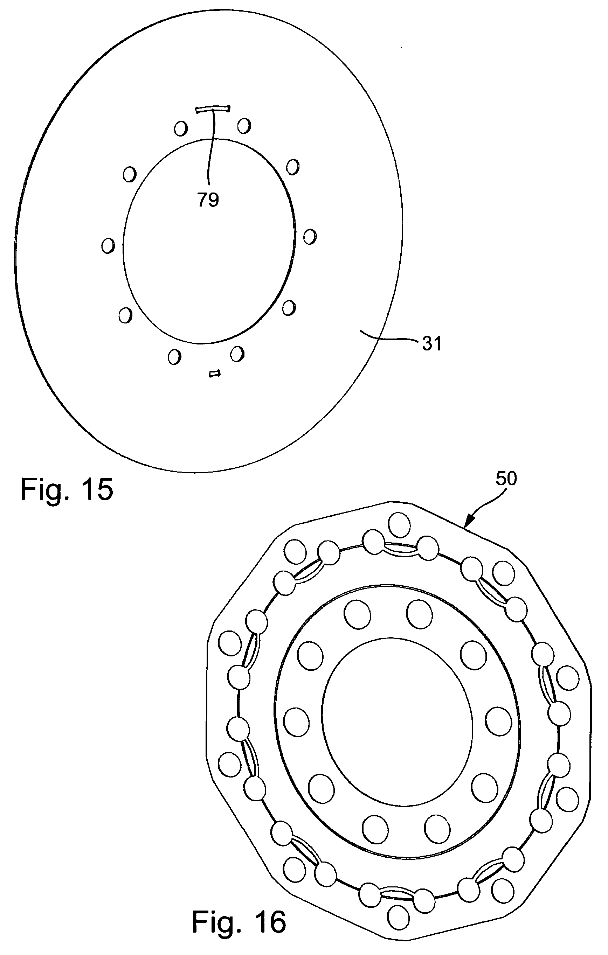

In Figur 15 sieht man, dass das Trägerblech 31 analog einen Durchbruch 79 zum Durchführen der Basis 35 der Blechklammer 34 aufweist.

In Figur 16 ist das Federblech 50 der Tellerfedereinrichtung 16 allein dargestellt.

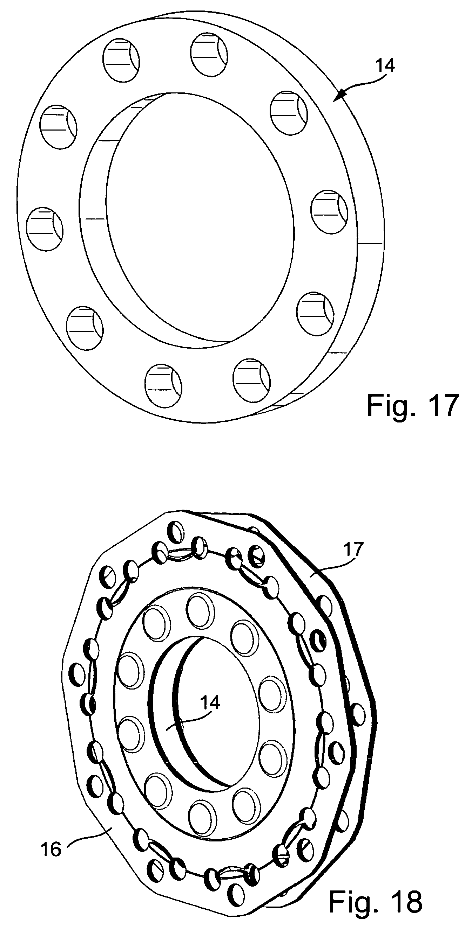

In Figur 17 ist der Zwischenring 14 allein dargestellt.

In Figur 18 sind die beiden Tellerfedereinrichtungen 16, 17 allein dargestellt. In Figur 18 sieht man, dass es sich bei den Tellerfedereinrichtungen 16, 17 um Tellerfederpakete handelt.

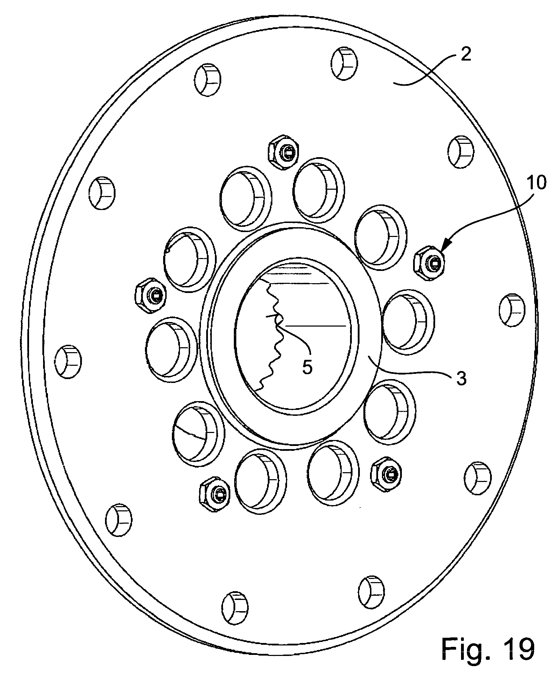

In Figur 19 ist die Mitnehmerscheibe 2 allein dargestellt.

Die Belaghälften 21, 22 sind mit den Trägerblechen 31, 32 verklebt. Das Trägerblech 31 ist fest mit dem Gegenrampenring 42 verbunden. Der Verstellrampenring 41 ist relativ zu dem Gegenrampenring 42 zentriert. Die Freilaufeinrichtung 48 ist zwischen dem Trägerblech 32 und dem Verstellrampenring 41 wirksam. Die beiden Trägerbleche 31, 32 sind jeweils über eines der Tellerfederpakete 16, 17 mit dem Zwischenring 14 verbunden. Die Tellerfederpakete 16, 17 erlauben eine axiale Bewegung der Trägerbleche 31, 32 für die Nachstellung bei gleichzeitiger Drehmomentübertragung. Die Tellerfederpakete oder Tellerfedereinrichtungen 16, 17 sind identisch aufgebaut. Dadurch wird sichergestellt, dass die Nachstellbewegung relativ zu dem Zwischenring 14 symmetrisch stattfindet. Über die gekonterten Einstellschrauben zwischen der Tellerfedereinrichtung 9 und der Mitnehmerscheibe 2 kann die Kupplungsscheibe 1 nach dem Einbau exakt positioniert werden.

### Bezugszeichenliste

1. Kupplungsscheibe
2. Mitnehmerscheibe
3. Nabe
5. Hirth-Verzahnung
7. Nietverbindung
8. Nietverbindung
9. Tellerfedereinrichtung
10. Kontermutter
11. Nietverbindungselement
12. Nietverbindungselement
14. Zwischenring
16. Tellerfedereinrichtung
17. Tellerfedereinrichtung
21. Belaghälfte
22. Belaghälfte
24. Rampeneinrichtung
25. Sensorreibelement
26. Abstandshalteeinrichtung
28. Sensorbelagpad
29. Trägerscheibe
31. Trägerblech
32. Trägerblech
34. Blechklammer
35. Basis
36. Schenkel
37. Schenkel
38. Sensorreibfläche
39. Reibfläche
40. Reibfläche
41. Verstellrampenring
42. Gegenrampenring
43. Rampeneinrichtung
44. Nietverbindungselement
46. Nietverbindungselement
48. Freilaufeinrichtung
50. Federblech
51. Durchgangsloch
52. Durchgangsloch
55. Ausnehmung
57. Verstellrampenring
58. Verstellrampenring
59. Verstellrampenring
60. Steuerrampe
62. Innenverzahnung
64. Gegensteuerrampe
65. Positioniernase
68. Grundkörper
69. Rastarm
70. Verzahnungsabschnitt
72. Durchbruch
75. Gegennachstellrampe
76. Gegennachstellrampe
77. Gegennachstellrampe
79. Durchbruch

## Patentansprüche

1. Kupplungsscheibeneinrichtung mit in axialer Richtung voneinander beabstandeten Reibbelaghälften (21,22), die zwischen zwei Kupplungselementen einklemmbar sind, und mit einer Nachstelleinrichtung, die zwischen den Reibbelaghälften (21,22) wirksam ist, um einen betriebsbedingten Verschleiß der Reibbelaghälften (21,22) auszugleichen, der von einer Sensoreinrichtung erfasst wird, **dadurch gekennzeichnet, dass** die Sensoreinrichtung ein Sensorreibelement (25) mit einer Sensorreibfläche (38) umfasst, an der eines der Kupplungselemente zur Anlage kommt, wenn dieses Kupplungselement an einer Reibfläche (39) der zugehörigen Reibbelaghälfte (21) zur Anlage kommt, und die durch eine Abstandshalteeinrichtung (26) in axialer Richtung in einem definierten Abstand zu einer Reibfläche (40) der anderen Reibbelaghälfte (22) gehalten ist.

2. Kupplungsscheibeneinrichtung nach Anspruch 1, **dadurch gekennzeichnet, dass** die Sensorreibfläche (38) in der gleichen Ebene wie die Reibfläche (39) der zugehörigen Reibbelaghälfte (21) angeordnet ist.

3. Kupplungsscheibeneinrichtung nach einem der vorhergehenden Ansprüche, **dadurch gekennzeichnet, dass** das Sensorreibelement (25) und die zugehörige Reibbelaghälfte (21) in axialer Richtung an einem gemeinsamen Abstützelement abgestützt sind.

4. Kupplungsscheibeneinrichtung nach einem der vorhergehenden Ansprüche, **dadurch gekennzeichnet, dass** das Sensorreibelement (25) und die zugehörige Reibbelaghälfte (21) in axialer Richtung an einem Gegenrampenring (42) einer Rampeneinrichtung (43) abgestützt sind.

5. Kupplungsscheibeneinrichtung nach Anspruch 4, **dadurch gekennzeichnet, dass** die andere Reibbelaghälfte (22) an einem Verstellrampenring (41) abgestützt ist, der mindestens eine Nachstellrampe (57-59) aufweist und gegenüber dem Gegenrampenring (42) verdrehbar ist.

6. Kupplungsscheibeneinrichtung nach Anspruch 5, **dadurch gekennzeichnet, dass** der Verstellrampenring (41) eine zusätzliche Steuerrampe (60) aufweist, die mit einer an der Abstandshalteeinrichtung (26) vorgesehenen Gegensteuerrampe (64) zusammenwirkt.

7. Kupplungsscheibeneinrichtung nach Anspruch 6, **dadurch gekennzeichnet, dass** der Steigungswinkel der Steuerrampe (60) nur halb so groß wie der Steigungswinkel der Nachstellrampe (57-59) ist.

8. Kupplungsscheibeneinrichtung nach einem der vorhergehenden Ansprüche, **dadurch gekennzeichnet, dass** das Sensorreibelement (25) rund oder teilweise gerundet ausgebildet und in einer Ausnehmung (55) gehalten ist, die in der zugehörigen Reibbelaghälfte (21) vorgesehen ist.

9. Kupplungsscheibeneinrichtung nach Anspruch 8, **dadurch gekennzeichnet, dass** das Sensorreibelement (25) in der zugehörigen Ausnehmung (55) drehbar so angeordnet und geführt ist, dass es sich in der zugehörigen Ausnehmung verdreht, wenn das zugehörige Kupplungselement im Betrieb einer mit der Kupplungsscheibeneinrichtung (1) ausgestatteten Kupplungseinrichtung an der Sensorreibfläche (38) des Sensorreibelements (25) zur Anlage kommt.

10. Kupplungsscheibeneinrichtung nach Anspruch 9, **dadurch gekennzeichnet, dass** die Sensorreibfläche (38) des Sensorreibelements (25) zumindest teilweise innerhalb der Reibfläche (39) der zugehörigen Reibbelaghälfte (21) angeordnet ist.

11. Kupplungsscheibeneinrichtung nach Anspruch 10, **dadurch gekennzeichnet, dass** sich die Sensorreibfläche (38) des Sensorreibelements (25) aus der Reibfläche (39) der zugehörigen Reibbelaghälfte (21) heraus erstreckt.

12. Kupplungsscheibeneinrichtung nach Anspruch 10 oder 11, **dadurch gekennzeichnet, dass** sich die Sensorreibfläche (38) des Sensorreibelements (25) aus der Reibfläche (39) der zugehörigen Reibbelaghälfte (21) heraus radial nach innen erstreckt.

13. Kupplungsscheibeneinrichtung nach Anspruch 11 oder 12, **dadurch gekennzeichnet, dass** der außerhalb der Reibfläche (39) der zugehörigen Reibbelaghälfte (21) angeordnete Bereich der Sensorreibfläche (38) des Sensorreibelements (25) von der Abstandshalteeinrichtung (26) umgriffen wird.

14. Kupplungsscheibeneinrichtung nach einem der vorhergehenden Ansprüche, **dadurch gekennzeichnet, dass** die Abstandshalteeinrichtung (26) von einer Blechklammer (34) gebildet wird.

15. Kupplungsscheibeneinrichtung nach Anspruch 14, **dadurch gekennzeichnet, dass** sich die Blechklammer (34) durch eine Belagtrageeinrichtung (31) der zu dem Sensorreibelement (25) gehörigen Reibbelaghälfte (21) hindurch erstreckt.

16. Kupplungsscheibeneinrichtung nach einem der vorhergehenden Ansprüche, **dadurch gekennzeichnet, dass** die Reibbelaghälften (21,22) an zwei Federeinrichtungen (16,17) angebracht sind.

17. Kupplungsscheibeneinrichtung nach Anspruch 16, **dadurch gekennzeichnet, dass** die Federeinrichtungen (16,17) an einem Zwischenring (14) befestigt sind.

18. Kupplungsscheibeneinrichtung nach dem Oberbegriff des Anspruchs 1, insbesondere nach einem der vorhergehenden Ansprüche, **dadurch gekennzeichnet, dass** ein beziehungsweise der Verstellrampenring (41) einer beziehungsweise der Rampeneinrichtung (43) so angeordnet und gestaltet ist, dass er sich aufgrund seiner Massenträgheit im Betrieb gegenüber einem beziehungsweise dem Gegenrampenring (42) verdreht, um den betriebsbedingten Verschleiß der Reibbelaghälften (21,22) auszugleichen.

19. Kupplungsscheibeneinrichtung nach Anspruch 18, **dadurch gekennzeichnet, dass** die Nachstelleinrichtung eine Freilaufeinrichtung (48) umfasst, die ein Verdrehen des Verstellrampenrings (41) relativ zu dem Gegenrampenring (42) nur in Verstellrichtung ermöglicht.

20. Kupplungsaggregat zur Drehmomentübertragung zwischen einem Motor und einem Getriebe, mit mindestens einer Kupplungseinrichtung, insbesondere einer Reibungskupplung, die eine Druckplatte umfasst, die drehfest, jedoch axial in Richtung einer zwischen der Druckplatte und einer Gegendruckplatte einklemmbaren Kupplungsscheibeneinrichtung (1) nach einem der vorhergehenden Ansprüche begrenzt verlagerbar ist.
